# FASCICULE DE BREVET EUROPEEN

(11) **EP 0 423 668 B1**
(45) Date de publication et mention de la délivrance du brevet: **28.06.1995**
(21) Numéro de dépôt: 90119682.4
(22) Date de dépôt: 15.10.1990
(51) Int. Cl.: G05B 15/02

(54) **Dispositif d'asservissement numérique**
Digitales Regelsystem
Numerical feedback control system

(30) Priorité: 17.10.1989 FR 8913550
(43) Date de publication de la demande: 24.04.1991
(73) Titulaire: ALCATEL CIT, 75008 Paris (FR)
(72) Inventeur: Lankar, André, F-75010 Paris (FR)
(74) Mandataire: Weinmiller, Jürgen

(56) Documents cités:
- EP-A- 0 043 536
- DE-A- 2 038 673
- DE-A- 2 044 193
- FR-A- 2 062 036

## Description

La présente invention concerne un dispositif d'asservissement numérique dont la fonction est de commander un équipement d'une très grande précision.

Les dispositifs d'asservissement numérique élaborent une commande sous la forme d'un nombre qui est généralement binaire. Si l'équipement à asservir est prévu pour recevoir une commande analogique, une tension dans la plupart des cas, il faut prévoir un convertisseur numérique-analogique qui convertit un nombre binaire en une tension proportionnnelle à ce nombre. La résolution d'un tel dispositif est imposée par la résolution du convertisseur qui est elle-même fonction de sa capacité en nombre de bits.

Les convertisseurs 12 bits disponibles dans le commerce sont très précis et sont fabriqués par de nombreux constructeurs, ils sont peu coûteux. On trouve également des convertisseurs 16 bits. Les convertisseurs 18 bits, la plus grande capacité actuellement disponible, sont très coûteux.

On connaît par le brevet européen EP-A-0 043 536 un convertisseur réalisé en deux modules, chaque module pouvant être considéré lui-même comme un convertisseur. Le premier module permet un réglage grossier tandis que le deuxième permet un réglage fin, le signal analogique de sortie étant la somme des signaux de sortie des deux modules. Il s'ensuit que la résolution est limitée par celle du deuxième module. Ce montage, de plus, est prévu pour être intégré sur un composant et se prête mal à une réalisation aux moyen de convertisseurs standards. Cette solution est donc coûteuse.

La présente invention a ainsi pour objet un dispositif d'asservissement numérique réalisable avec des composants standards qui présente une résolution accrue et un prix réduit. Elle permet l'asservissement d'équipements avec une résolution meilleure que celle des convertisseurs actuellement disponibles.

Le dispositif selon l'invention est prévu pour l'asservissement numérique d'un équipement recevant sur son entrée un signal d'asservissement et produisant un signal de mesure de la grandeur à asservir. Il comprend un système de traitement de l'information recevant une valeur de consigne et le signal de mesure pour fournir une valeur de correction à un premier convertisseur et une valeur de réglage à un ensemble de réglage, un sommateur qui produit le signal d'asservissement à partir d'un signal de correction issu du premier convertisseur et d'un signal de réglage issu de l'ensemble de réglage et se caractérise en ce que cet ensemble de réglage comprend un deuxième convertisseur numérique-analogique qui reçoit la valeur de réglage, suivi d'un diviseur de tension qui produit le signal de réglage, cette valeur de réglage représentant une contribution au signal d'asservissement en rapport avec le facteur de division de ce diviseur de tension.

De plus, le dispositif d'asservissement numérique comprend un module de temporisation qui reçoit sur son entrée un signal intermédiaire issu du sommateur et qui produit sur sa sortie le signal d'asservissement, un comparateur qui reçoit sur ses entrées ce signal intermédiaire et ce signal d'asservissement et qui fournit sur sa sortie une information situant le signal d'asservissement par rapport au signal intermédiaire destinée au système de traitement d'information, le système de traitement d'information comprenant des moyens pour, lorsque la valeur de correction a été modifiée, agir sur la valeur de réglage de manière à ce que le signal intermédiaire et le signal d'asservissement tendent à être égaux.

Le dispositif d'asservissement numérique trouvera application notamment dans l'asservissement d'un oscillateur commandé en tension.

Les différents objets et caractéristiques de l'invention apparaîtront maintenant de manière plus détaillée dans la description d'exemples de réalisation donnés à titre non limitatif en se référant aux figures annexées qui représentent :
- La figure 1, le diagramme d'un dispositif d'asservissement numérique selon l'invention,
- La figure 2, un organigramme décrivant le fonctionnement de ce dispositif,
- La figure 3, le diagramme d'une variante d'un dispositif d'asservissement numérique selon l'invention.
- La figure 4, un organigramme décrivant le fonctionnement de cette variante.

Les éléments présents dans différentes figures porteront une seule référence.

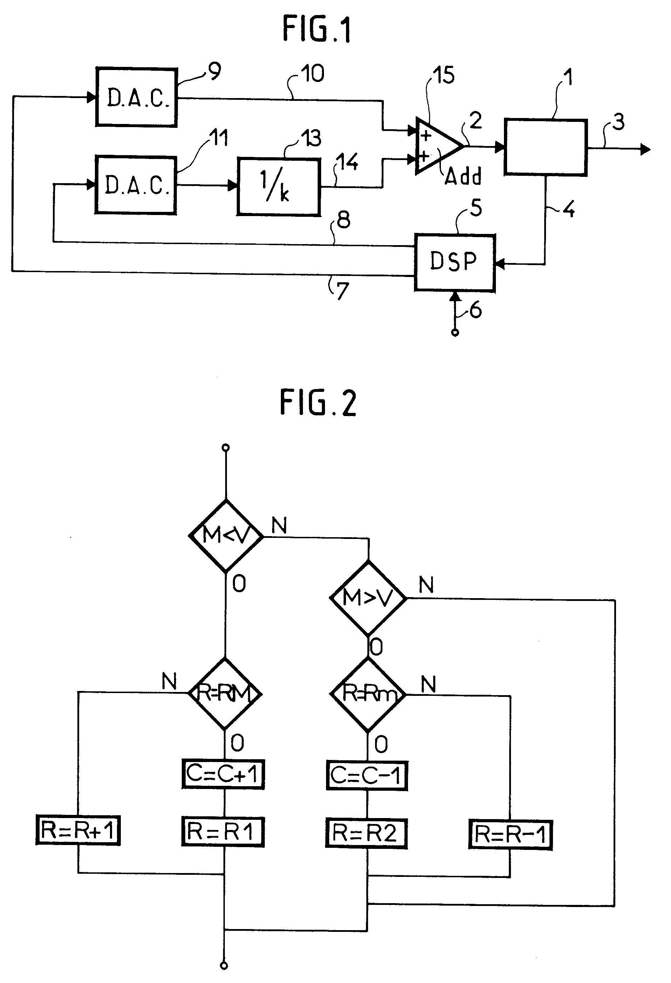

Le dispositif d'asservissement numérique représenté dans la figure 1 comprend un équipement 1 qui doit être asservi. Cet équipement 1 reçoit sur son entrée un signal d'asservissement 2 et produit une grandeur de sortie 3 et un signal de mesure 4 de cette grandeur.

Il comprend également un système de traitement d'information DSP 5 qui reçoit le signal de mesure 4 et une valeur de consigne 6, et fournit une valeur de correction 7 et une valeur de réglage 8, ces deux valeurs étant des nombres binaires.

Le dispositif d'asservissement numérique comprend aussi un premier convertisseur numérique-analogique DAC 9 qui convertit la valeur de correction 7 en un signal de correction 10. Il comprend un deuxième convertisseur numérique-analogique DAC 11 qui reçoit sur son entrée la valeur de règlage 8 et qui est suivi d'un diviseur de tension 13 qui produit un signal de réglage 14.

Le signal d'asservissement 2 est produit par un sommateur 15 qui reçoit sur ses entrées le signal de correction 10 et le signal de règlage 14.

Les deux convertisseurs 9, 11 sont ici supposés identiques, c'est-à-dire qu'ils produisent une même tension de sortie pour une même valeur numérique en entrée. Le diviseur de tension 13 produit sur sa sortie une tension égale à sa tension d'entrée divisée par un facteur k. La valeur de règlage 8 apporte donc une contribution k fois moins importante que la valeur 7 dans l'élaboration du signal d'asservissement 2. Il est possible d'obtenir un résultat similaire sans sortir du cadre de l'invention, en modifiant la tension de référence d'un des convertisseurs par exemple.

Le mode d'asservissement adopté dans cet exemple de réalisation est de type incrémental, ce qui ne doit pas être considéré comme une limitation de l'invention. Dans un asservissement de ce type, on compare le signal de mesure 4 à la valeur de consigne 6; l'action engagée par le dispositif d'asservissement dépend uniquement de la position relative de ces deux nombres, le signal de mesure 4 étant considéré comme une donnée numérique. Si le signal de mesure 4 est inférieur à la valeur de consigne on augmente le signal d'asservissement 2 de la plus petite quantité possible eu égard aux performances des convertisseurs. Si le signal de mesure 4 est supérieur à la valeur de consigne 6 on diminue le signal d'asservissement de la plus petite quantité possible. Enfin si le signal de mesure et la valeur de consigne sont identiques on ne modifie pas les signaux de commande.

Les moyens permettant de réaliser un tel asservissement seront maintenant précisés en se référant à la figure 2. Pour la clarté de cette figure, certaines conventions ont été adoptées pour la définition de différentes valeurs caractéristiques. Le deuxième convertisseur reçoit sur son entrée la valeur de règlage 8 que l'on appellera aussi R. On utilise ce convertisseur sur une certaine plage entre une valeur minimale Rm et une valeur maximale RM,Rm et RM étant choisis tels que leur différence soit supérieure au facteur de division k. On définit également deux autres valeurs R1 et R2 dont l'utilité sera explicitée ultérieurement. La valeur de correction 7 appliquée sur le premier convertisseur sera nommée C, la valeur de consigne 6 portera de même la référence V et le signal de mesure 4 la référence M.

Ainsi, le système de traitement d'information 5 comprend des moyens pour comparer M, le signal de mesure 4 et V, la valeur de consigne 6 :
1.M est inférieur à V ; R, la valeur de règlage 8 est comparée à RM :
1.1 R est égal à RM; le deuxième convertisseur ne peut pas, dans ce cas, être incrémenté, C la valeur de correction 7 est alors incrémentée, la valeur de R est forcée à R1;
1.2 R est différent de RM; R est incrémentée;
2. M est supérieur à V; R, la valeur de règlage 8 est comparée à Rm :
2.1 R est égal à Rm; R ne peut pas être décrémentée, C est décrémentée et R est forcée à R2;
2.2 R est différent de Rm; R est décrémentée;
3. M est égal à V : ni R, ni C ne sont modifiées.

En théorie, si tous les éléments étaient parfaits, on pourrait prendre R2 égal à RM et R1 égal à Rm. Cependant, pour compenser des petites erreurs dûes aux convertisseurs 9,11 et au diviseur de tension 13 on choisit R2 un peu inférieur à RM et R1 un peu supérieur à Rm tels que la différence de R2 et de R1 soit supérieure à k. On évite ainsi des oscillations qui pourraient se produire si le signal d'asservissement 2 diminuait légèrement après une opération devant le faire augmenter ou, au contraire, s'il augmentait légèrement après une opération devant le faire diminuer.

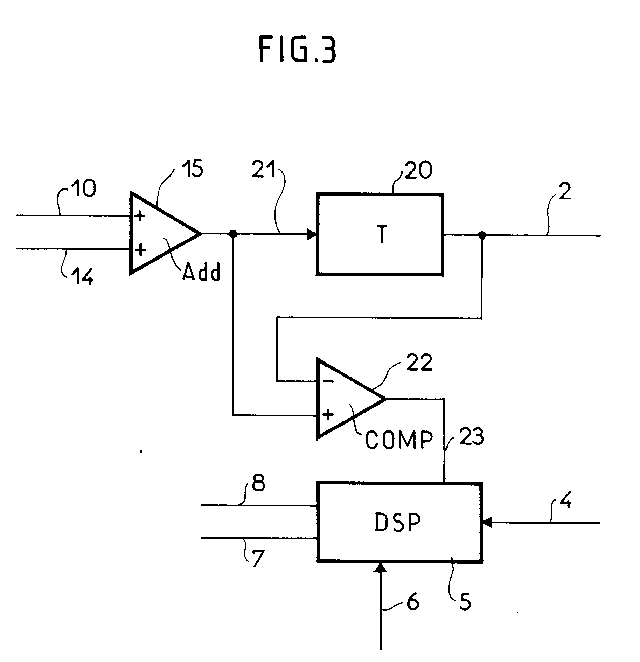

Dans une variante du dispositif d'asservissement selon l'invention, les mêmes considérations s'appliquent. Cependant on a apporté les modifications suivantes qui apparaissent dans la figure 3. Un module de temporisation 20 est intercalé entre le sommateur 15 et l'équipement 1 à asservir. Ce module de temporisation reçoit sur son entrée le signal de sortie du sommateur 15 que l'on appelera désormais signal intermédiaire 21; il produit sur sa sortie le signal d'asservissement 2. Ce module de temporisation 20 peut être une ligne à retard qui transmet sur sa sortie 2 le signal appliqué sur son entrée avec un retard T. Avantageusement, le module de temporisation 20 sera un échantilloneur-bloqueur qui modifie sa sortie avec une fréquence de récurrence correspondant à la période T. A chaque début de période il répercute sur sa sortie le signal qu'il voit sur son entrée; durant le reste de la période, il ne tient pas compte du signal d'entrée. Le dispositif d'asservissement comprend également un comparateur 22 qui reçoit sur ses entrées le signal intermédiaire 21 et le signal d'asservissement 2. Il produit une information de sortie 23 destinée au système de traitement d'information 5. Cette information de sortie signifie si le signal d'asservissement 2 est supérieur, inférieur ou égal au signal intermédiaire 21. En se référant au fonctionnement classique d'un comparateur qui produit une information de sortie binaire relative à la différence des signaux appliqués sur ses deux entrées sous réserve que cette différence soit supérieure à un seuil, on admettra que les deux signaux appliqués sur le comparateur 22 sont égaux dès qu'une variation d'un incrément de la valeur de réglage 8 aura provoqué le basculement de ce comparateur 22. De plus ce comparateur sera choisi tel que son seuil soit inférieur à la variation du signal intermédiaire 21 correspondant à un incrément de la valeur de réglage 8.

Cette variante du dispositif d'asservissement permet, lorsque le deuxième convertisseur 11 a atteint une des extrémités de sa plage de fonctionnement (R = RM ou R= Rm), de rattraper les erreurs dûes aux deux convertisseurs 9,11 et au diviseur de tension 13. Lorsque la valeur de correction 7 a été modifiée, le dispositif agit sur la valeur de réglage 8 de manière à établir un signal intermédiaire 21 dont la valeur est égale à celle du signal d'asservissement 2; la période T est choisie telle que le temps nécessaire à cette opération soit inférieur à T. Le dispositif peut ensuite procéder à une modification de la valeur de réglage 8.

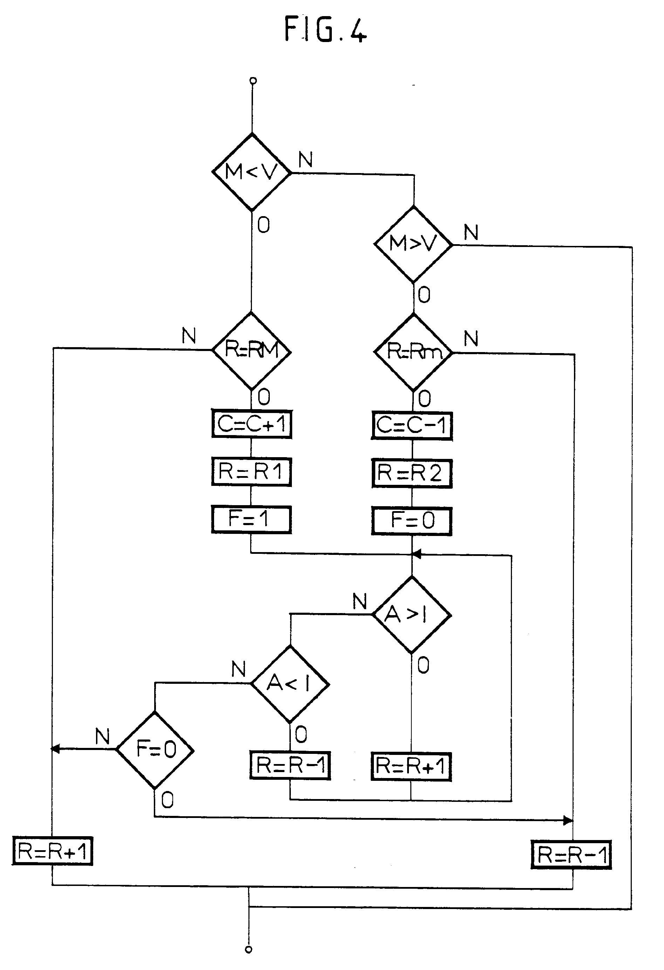

Les moyens permettant de réaliser un tel asservissement seront maintenant précisés en se référant à la figure 4. En supplément des références précédemment adoptées qui restent valables, nous appellerons I le signal intermédiaire 21, A le signal d'asservissement 2; nous utiliserons également un registre F qui sera positionné à 0 si le signal d'asservissement 2 doit être diminué et qui sera positionné à 1 si ce signal doit être augmenté.

Ainsi, le système de traitement d'information 5 comprend des moyens pour comparer M, le signal de mesure 4 et V, la valeur de consigne 6 :
1- M est inférieur à V; R, la valeur de réglage 8 est comparée à RM :
1.1 R est égal à RM; C, la valeur de correction 7 est incrémentée, R, la valeur de règlage 8 est forcée à R1, le registre F est positionné à 1, ensuite, A, le signal d'asservissement 2 est comparé à I le signal intermédiaire 21 :
1.1.1 A est supérieur à I; R est incrémentée, A et I sont à nouveau comparés, et selon le résultat de cette comparaison, l'une des étapes 1.1.1, 1.1.2 ou 1.1.3 est effectuée;
1.1.2 A est inférieur à I; R est décrémentée, A et I sont à nouveau comparés et selon le résultat de cette comparaison, l'une des étapes 1.1.1,1.1.2 ou 1.1.3 est effectuée;
1.1.3 A et I sont égaux; la valeur de F est alors testée :
1.1.3.1 F=0; R est décrémentée;
1.1.3.2 F=1; R est incrémentée;
1.2 R est différent de RM; R est incrémentée;
2. M est supérieur à V; R, la valeur de règlage 8 est comparée à RM :
2.1 R est égal à Rm; C, la valeur de correction 7 est décrémentée, R la valeur de règlage 8 est forcée à R2, le registre F est positionné à 0, ensuite, A, le signal d'asservissement 2 est comparé à I, le signal intermédiaire 21 :
2.1.1 A est supérieur à I; R est incrémentée, A et I sont à nouveau comparés et selon le résultat de cette comparaison, l'une des étapes 2.1.1, 2.1.2 ou 2.1.3 est effectuée;
2.1.2 A est inférieur à I; R est décrémentée, A et I sont à nouveau comparés et selon le résultat de cette comparaison, l'une des étapes 2.1.1, 2.1.2 ou 2.1.3 est effectuée;
2.1.3 A et I sont égaux; la valeur de F est alors testée:
2.1.3.1 F=0; R est décrémentée;
2.1.3.2 F=1; R est incrémentée;
2.2 R est différent de Rm; R est décrémentée;
3 M est égal à V; ni R, ni C ne sont modifiées.

Le dispositif d'asservissement numérique selon l'invention permet ainsi d'obtenir une résolution meilleure que celle du convertisseur 9 sous réserve que k soit supérieur à l'unité.

Il va sans dire que, sans sortir du cadre de l'invention, on peut multiplier les ensembles de réglage, un ensemble de réglage étant constitué d'un convertisseur semblabe au deuxième convertisseur 11 et d'un diviseur de tension semblabe au diviseur 13. Chaque ensemble de réglage, dans ce cas, a son propre facteur de division k. Le signal d'asservissement 2 ou le signal intermédiaire 21 est alors la somme du signal de correction 10 et des signaux issus des différents ensembles de réglage. Le système de traitement d'information 5 comprend alors des moyens similaires à ceux décrits ci-dessus pour élaborer les valeurs numériques destinées aux différents convertisseurs.

Le dispositif d'asservissement numérique selon l'invention trouvera avantageusement application dans la commande d'un oscillateur de très haute stabilité. L'excursion de fréquence rapportée à la fréquence centrale de fonctionnement d'un tel oscillateur est souvent comprise entre 10⁻⁷ et 10⁻⁶ pour une tension de commande variant entre 0 et 10 volts.

Le présent dispositif peut être configuré, par exemple, de la manière suivante :
- convertisseurs 9,11 : 12 bits, tension de référence 10V,
- diviseur de tension 13 ayant un facteur de division k égal à 100,
- comparateur 22 ayant un seuil de 20 »V.

La variation minimale du signal de règlage 14 est ainsi de 24,4 »V ce qui correspond à une variation minimale du signal d'asservissement de 57 »V compte tenu du seuil du comparateur 22 et de l'erreur de pas du deuxième convertisseur 11. La performance du dispositif en terme de résolution est ainsi équivalente à celle qui aurait été obtenue avec un convertisseur numérique-analogique 18 bits.

Les valeurs caractéristiques suivantes peuvent convenir dans le cadre de cette application :
- Rm = 0
- R1 = 200
- R2 = 300
- RM = 500

## Revendications

1. Dispositif d'asservissement numérique d'un équipement (1) recevant sur son entrée un signal d'asservissement (2) et produisant un signal de mesure (4) de la grandeur à asservir (3), comprenant un système de traitement de l'information (5) recevant une valeur de consigne (6) et ledit signal de mesure pour fournir une valeur de correction (7) à un premier convertisseur numérique-analogique (9) et une valeur de réglage (8) à un ensemble de réglage, un sommateur (15) qui produit ledit signal d'asservissement à partir d'un signal de correction (10) issu dudit premier convertisseur et d'un signal de réglage (14) issu dudit ensemble de réglage caractérisé en ce que ledit ensemble de réglage comprend un deuxième convertisseur numérique-analogique (11) qui reçoit ladite valeur de réglage (8), suivi d'un diviseur de tension (13) qui produit ledit signal de réglage (14), cette valeur de réglage (8) représentant une contribution audit signal d'asservissement (2) en rapport avec le facteur de division dudit diviseur de tension (13).

2. Dispositif d'asservissement numérique selon la revendication précédente caractérisé en ce qu'il comprend un module de temporisation (20) qui reçoit sur son entrée un signal intermédiaire (21) issu dudit sommateur (15) et qui produit sur sa sortie ledit signal d'asservissement (2), un comparateur (22) qui reçoit sur ses entrées ce signal intermédiaire et ce signal d'asservissement et qui fournit sur sa sortie une information (23) situant ledit signal d'asservissement (2) par rapport audit signal intermédiaire (21) destinée audit système de traitement d'information (5) et en ce que ce système de traitement d'information comprend des moyens pour, lorsque ladite valeur de correction (7) a été modifiée, agir sur ladite valeur de réglage (8) de manière à ce que le signal intermédiaire (21) et le signal d'asservissement (2) tendent à être égaux.

3. Application du dispositif d'asservissement numérique selon l'une quelconque des revendications précédentes à l'asservissement d'un oscillateur commandé en tension.

## Patentansprüche

1. Digitale Regeleinrichtung für eine Einheit (1), die an ihrem Eingang ein Stellsignal (2) empfängt und ein Meßsignal (4) der zu regelnden Größe (3) erzeugt, mit einem System (5) zur Informationsverarbeitung, das einen Sollwert (6) und das Meßsignal empfängt, um einen Korrekturwert (7) an einen ersten Digital-Analog-Wandler (9) sowie einen Regelwert (8) an ein Regelglied zu liefern, mit einem Summierglied (15), das das Stellsignal aus einem Korrektursignal (10), das vom ersten Wandler ausgegeben wird, und einem Regelsignal (14) erzeugt, das von dem Regelglied ausgegeben wird, dadurch gekennzeichnet, daß das Regelglied einen zweiten Digital-Analog-Wandler (11) aufweist, der den Regelwert (8) empfängt und an den ein Spannungsteiler (13) angeschlossen ist, der das Regelsignal (14) erzeugt, wobei der Regelwert (8) einen Beitrag zum Stellsignal (2) im Verhältnis des Teilungsfaktors des Spannungsteilers (13) darstellt.

2. Digitale Regeleinrichtung nach Anspruch 1, dadurch gekennzeichnet, daß sie einen Zeitverzögerungsmodul (20), der an seinem Eingang ein Zwischensignal (21) empfängt, das vom Summierglied (15) ausgegeben wird, und einen Komparator (22) aufweist, der an seinen Eingängen das Zwischensignal sowie das Stellsignal empfängt und der an seinem Ausgang eine Information (23) liefert, die das Stellsignal (2) in Relation zum Zwischensignal (21) setzt und für das Informationsverarbeitungssystem (5) bestimmt ist, und daß das Informationsverarbeitungssystem Mittel aufweist, die, wenn der Korrekturwert (7) geändert worden ist, auf den Regelwert (8) einwirken, derart, daß das Zwischensignal (21) und das Stellsignal (2) sich einander annähern.

3. Anwendung der digitalen Regeleinrichtung nach irgendeinem der vorhergehenden Ansprüche auf die Regelung eines spannungsgesteuerten Oszillators.

## Claims

1. A digital servo-control system for equipment (1) having an input for receiving a control signal (2) and producing a measurement signal (4) representative of the magnitude (3) to be servo-controlled, the system comprising a processor (5) receiving both said measurement signal and a reference value (6) and delivering both a correction value (7) to a first digital-to-analog converter (9) and an adjustment value (8) to an adjustment assembly, a summing circuit (15) producing said control signal on the basis of a correction signal (10) delivered by said first converter and an adjustment signal (14) delivered by said adjustment assembly, the system being characterized in that said adjustment assembly includes a second digital-to-analog converter (11) which receives said adjustment value (8), followed by a voltage divider (13) which produces said adjustment signal (14), said adjustment value (8) providing a contribution to said control signal (2) which is conditioned by the division factor of said voltage divider (13).

2. A digital servo-control system according to the preceding claim, characterized in that it includes a timing module (20) having an input that receives an intermediate signal (21) delivered by said summing circuit (15) and having an output on which said control signal (2) is delivered, a comparator (22) which receives said intermediate signal on one of its inputs and said control signal on another input and which delivers an output signal (23) specifying the position of said control signal (2) relative to said intermediate signal (21), said output signal being delivered to said processor (5), and in that said processor includes means suitable, when said correction value (7) has been changed, for acting on said adjustment value (8) in such a manner as to cause said intermediate signal (21) and said control signal (2) to tend to be equal.

3. An application of the digital servo-control system according to either preceding claim, to servo-controlling a voltage controlled oscillator.
